# EUROPEAN PATENT SPECIFICATION

(11) **EP 2 888 489 B1**
(45) Date of publication and mention of the grant of the patent: **27.09.2017**
(21) Application number: 13753820.3
(22) Date of filing: 31.07.2013
(51) Int. Cl.: F16B 39/30, B65D 55/02, B65D 47/08

(54) **ANTI-ROTATION CLOSURE**
DREHSICHERUNGSVERSCHLUSS
FERMETURE ANTI-ROTATION

(30) Priority: 24.08.2012 GB 201215254
(43) Date of publication of application: 01.07.2015
(73) Proprietor: Obrist Closures Switzerland GmbH, 4153 Reinach (CH)
(72) Inventor: BULL, Martin Carey, Tasburgh Norfolk NR15 1NU (GB)
(74) Representative: Bryers LLP
(86) International application number: PCT/EP2013/066137
(87) International publication number: WO 2014/029594

(56) References cited:
- FR-A1- 2 828 176
- GB-A- 2 068 911
- US-A- 2 834 390
- US-A- 3 526 332
- US-A- 3 888 376
- US-A- 4 053 077
- US-A1- 2008 296 251

## Description

The present invention relates to container closures comprising a screw thread.

Screw threads are a widely used fastening mechanism which can usually be defined as a ridge or uniform section in the form of a helix on the external or internal surface of a cylinder, or in the form of a conical spiral on the external or internal surface of a cone. In general, screw threads are used to reversibly couple two things together; for example closures and container necks are provided with co-operating screw thread formations to allow the closure to be screwed on and off the container neck.

In some cases there is a requirement to provide a non-removable closure; in other words a closure which can be applied to a container neck and subsequently cannot be removed.

GB2068911A discloses a locking closure cap according to the preamble of claim 1, comprising integral locking ratchet teeth that engage a series of ratchet teeth on a container neck, thereby locking the closure on the container.

US2008296251A1 discloses a non-removable finish and closure system that resists rotational movement using complementary thread segments with ratchet-type engaging portions.

US4053077A discloses a child safety cap where the cap and container are provided with screw threads having inter-engaging ratchet-like teeth preventing a turn of the cap to remove it unless the cap is pushed down to release the teeth. The present invention provides a closure according to claim 1. Threads, necks, closures or combinations according to aspects of the present invention may include cylindrical and/or conical thread structures.

Closures of the present invention may be formed as dispensing closures. Therefore the closure may further comprise a dispensing orifice or structure such as a dispensing spout. A self-closing valve may be provided to regulate the flow of product from a container through a dispensing orifice.

The closure may be formed as a flip-top closure or other arrangement in which two or more parts such as a base and a lid are provided. In such closures the anti-rotation function may be provided by formations provided on or by the base.

The present invention may relate to closures for use with containers in situations where refilling of the container is to be prevented. Accordingly, a non-removable closure, such as a non-removable flip-top dispensing closure may be provided.

Formations on a closure and/or container neck are provided by a plurality of spaced formation sections. This provides a gap in the screw thread and this could have additional benefits for circumstances in which venting of a container is required during opening, for example with carbonated drinks. A plurality of venting gaps may therefore be provided within the screw thread helical line.

According to a further aspect there is provided, in combination, a closure and a container neck, the closure and neck including co-operating screw thread formations, in which the closure and neck further comprise co-operating anti-rotation feature for preventing removal of the closure after it has been screwed onto the neck.

The closure includes a sidewall. The sidewall may include one or more regions of weakness, such as frangible lines, which are arranged to break if removal of the closure is attempted. The lines may, for example, extend longitudinally along the length of the skirt.

The region/s of weakness may be located between anti-rotation features. For example, lines of weakness may be interspersed between adjacent teeth.

The closure may be a flip-top closure, such as a flip-top dispensing closure; for example including a base with a dispensing outlet and a lid hinged to the base.

Different aspects of the present invention may be used separately or together.

Further particular and preferred aspects of the present invention are set out in the accompanying independent and dependent claims.

The present invention will now be more particularly described, by way of example, with reference to the accompanying drawings, in which:
Figure 1 is a perspective view of a container neck;
Figure 2 is plan view of the neck finish of Figure 1;
Figure 3 is an alternative perspective view of the neck of Figures 1 and 2;
Figure 4 is a side elevation of the neck of Figures 1 to 3;
Figure 5 is an alternative side elevation of the neck of Figure 4;
Figure 6 is a further alternative side view of the neck of Figures 4 and 5;
Figure 7 is an under plan perspective view of a closure which does not form part of the present invention;
Figure 8 is a section of the closure of Figure 7;
Figure 9 shows a closure of the type shown in Figures 7 and 8 being offered up to a neck of the type shown in Figures 1 to 6;
Figure 10 is a side view of the closure and neck of Figure 9 shown fitted together;
Figure 11 is a partial section of the closure/neck of Figure 10;
Figure 12 is a top-down section of the closure/neck of Figures 10 and 11;
Figure 13 is a partial section of an example closure shown fitted to a neck of the type shown in Figures 1 to 6;
Figure 14 is an underside perspective view of a closure formed according to an alternative embodiment;
Figure 15 is an underplan view of the closure of Figure 14;
Figure 16 is an underside perspective view of a closure formed according to an embodiment according to the present invention;
Figure 17 is an underplan view of the closure of Figure 16;
Figure 18 is a section of a closure formed according to an alternative embodiment;
Figure 19 is an underplan view of a base of the closure of Figure 18;
Figure 20 is a magnified view of the region of a ratchet forming part of the base of Figure 19;
Figure 21 is a perspective view of the closure of Figure 18;
Figure 22 is a perspective view of a container neck suitable for use with the closure of Figures 18 to 21;
Figure 23 is a side elevation of the neck of Figure 22; and
Figure 24 is a perspective view illustrating the closure of Figures 18 to 21 attached to the neck of Figures 22 and 23, with the closure shown in phantom for purposes of clarity.

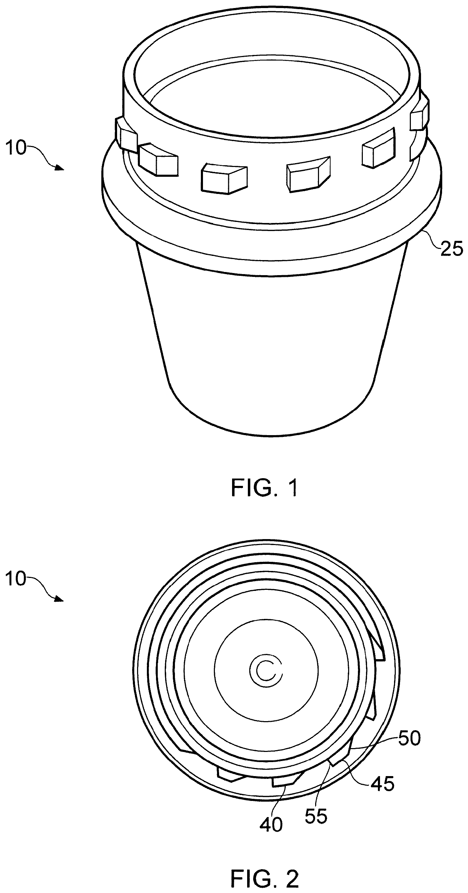

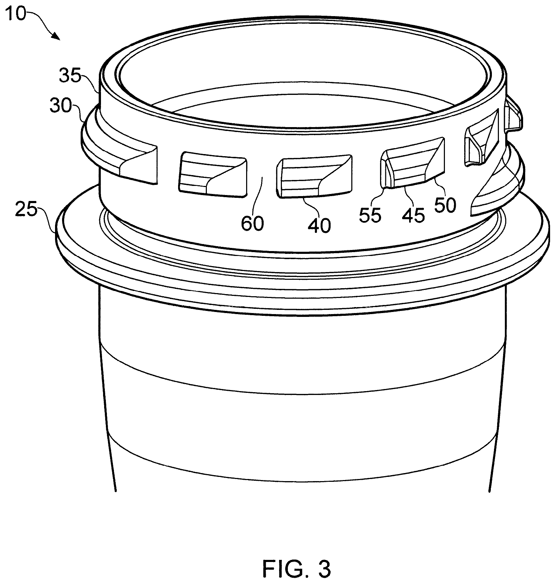

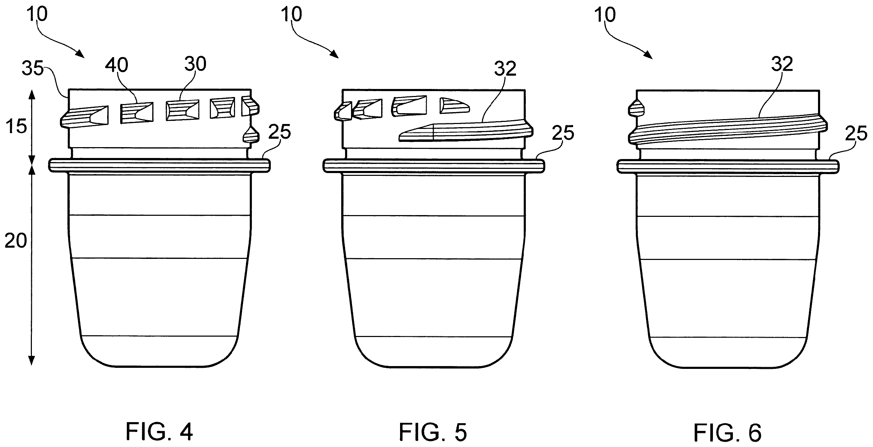

Referring first to Figures 1 to 6 there is shown a container neck generally indicated 10. The neck is a generally cylindrical tubular structure illustrated in these drawings as a preform and accordingly having a neck finish region 15 and a body-forming region 20 as shown best in Figure 4.

The finish 15 includes a neck transfer bead 25 in the form of a radially extending annular flange, above which is provided an external screw thread generally indicated 30 and provided on the external surface 35 of the mouth region of the neck.

The screw thread 30 is generally helical. The end of the thread adjacent the bead 25 is continuous and in this respect is conventional. The other end of the screw thread 30 is comprised of a plurality of thread segments 40 each of which comprises of a central section 45 with a profile corresponding to the continuous section 32 of the thread. In addition each segment 40 comprises an inclined leading face 50 and a flat lagging face 55. The segments 40 are separated by gaps 60, exposing the surface 35.

The body 20 is shown in its unexpanded state and in use would be expanded (for example by blow forming) into a final structure such as a bottle.

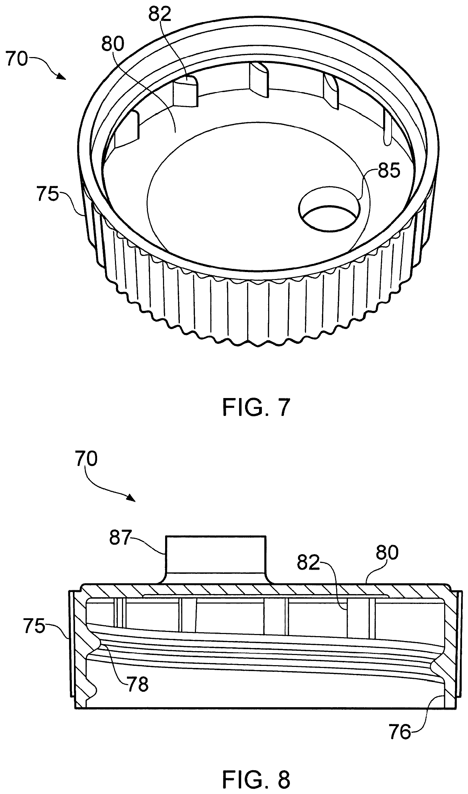

Referring now to Figures 7 and 8 a closure 70 which does not form part of the present invention is shown.

The closure 70 comprises a generally cylindrical side wall 75 closed at one end by a top plate 80. The top plate 80 includes, in this embodiment, a dispensing orifice 85 defined by an upstanding spout 87 which projects from the external side of the top plate 80.

The interior surface 76 of the side wall 75 is provided towards its free end by a continuous single-start screw thread 78 which extends radially inwardly and helically towards the top plate 80. Extending radially inwardly from the surface 76 adjacent the top plate are a plurality of teeth 82 which are rotationally inclined away from the direction in which the closure will be screwed on to a container neck. The teeth 82 are of varying heights to extend from the top plate 80 to the upper edge of the helical thread 78.

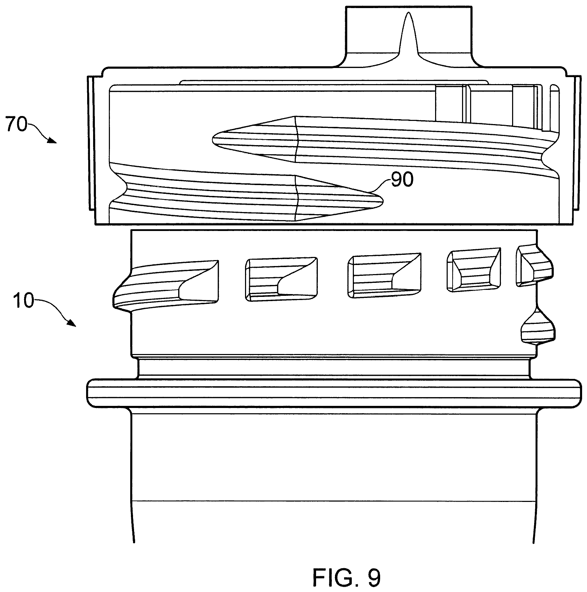

In Figure 9 the closure 70 of Figures 7 and 8 is shown offered up to the neck 10 of Figures 1 to 6. It will be noted that the start 90 of the closure thread 78 will, as the closure 70 is screwed on to the neck, initially encounter the segments 40 on the neck. Because the sections 45 of the segments 40 are threads the closure 70 can be rotated around the neck 10.

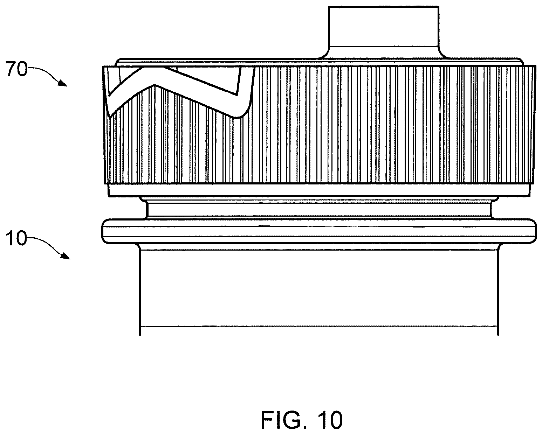

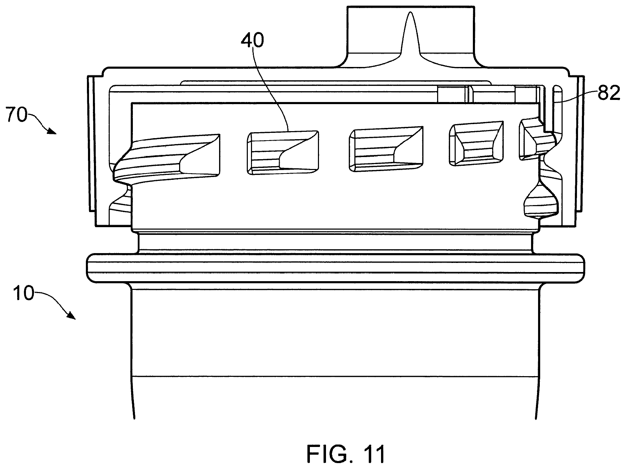

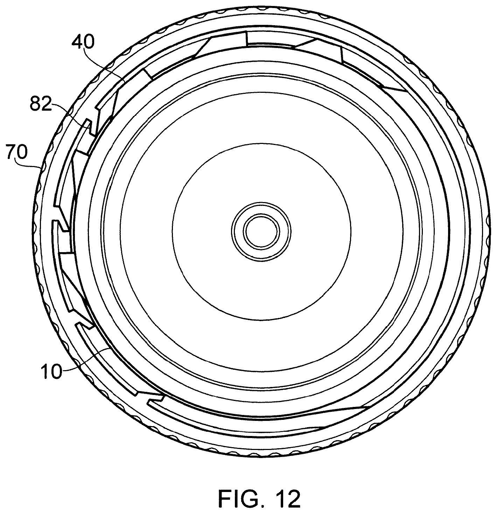

As the closure rotates around the neck, eventually the teeth 82 will begin to encounter the segments 40. The inclination of the teeth 82 matches the ramp-like faces 50 of the segments so that teeth 82 can successively pass over ramps 50. This continues until the closure is fully screwed on to the neck as shown in Figures 10 to 12. The teeth 82 now sit in respective gaps 60.

If unscrewing is now attempted the teeth 82 will abut the faces 55 on respective segments 40. In other words the teeth 82 cannot pass back over the segments 40 so as to lock the closure onto the container neck and to provide a non-removable closure via a ratchet thread.

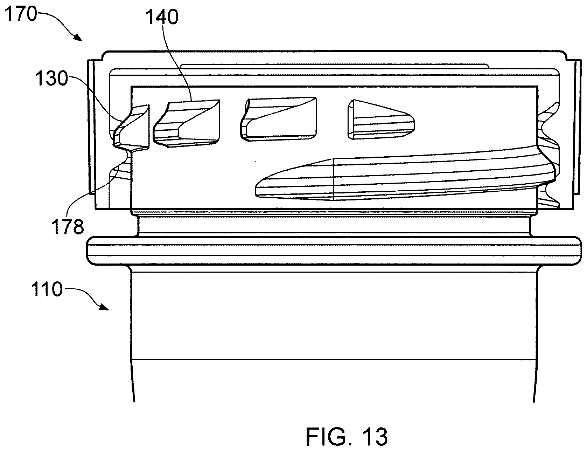

Referring now to Figure 13 there is shown an example of a container neck 110 of the same general type as that shown in Figures 1 to 6. In this example, a closure 170 is shown screwed on to the neck 110. The example closure 170 is different to the closure 70 in as much as, although it has an identical internal screw thread 178 it is completely lacking any anti-rotational teeth. Because the ratchet thread 130 of the neck is configured in such a way to accept a screw thread the example closure 170 can be screwed fully on to the neck as shown in Figure 13. In addition, because the example closure 170 does not have any anti-rotation lugs and there is no interference between the closure thread 178 and the segments 140, the example closure can be freely unscrewed. This means that the same neck finish can be used either in a removable or non-removable system.

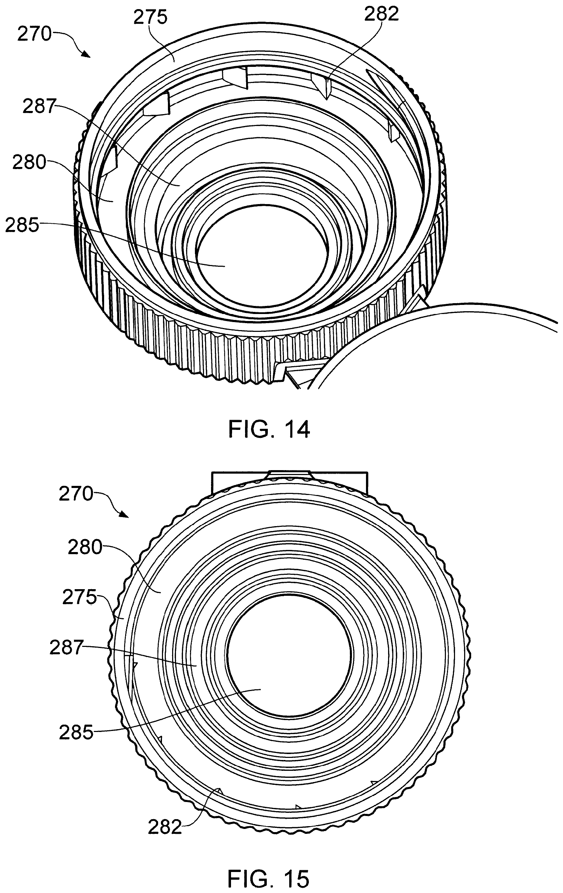

Referring now to Figures 14 and 15 there is shown a closure 270 formed according to an alternative embodiment, which does not form part of the present invention. The closure 270 is similar to the closure 70 shown in Figure 7 in that it comprises a cylindrical sidewall 275 closed at one end by a top plate 280.

The top plate 280 includes, in this embodiment, a central dispensing orifice 285 defined by an upstanding turret-like spout 287 which projects from the external side of the top plate 280.

The interior surface of the side wall 275 is provided with a continuous single-start screw thread 278 which extends radially inwardly and helically towards the top plate 280. Extending radially inwardly from the interior surface and adjacent the top plate are a plurality of ratchets 282 which "sit" on top of the screw thread (and may or may not be formed integrally with the thread, and may or may not be in contact with the thread), and are rotationally inclined away from the direction in which the closure will be screwed on to a container neck. In this embodiment the ratchets 282 are positioned around a limited area of the thread towards the end at which it terminates closest to the plate 280.

The closure 270 functions generally in the same way as the closure 70 and can be applied to a container neck. The container neck (not shown) may include one or more anti-rotation formations and a screw thread for engaging the thread and ratchets of the closure so that the closure can be screwed on but is prevented from being unscrewed. If the closure is applied to a neck finish with a screw thread but without anti-rotation formations then it may be configured to function as a normal screw-on, screw-off closure, with no anti-unscrewing functionality.

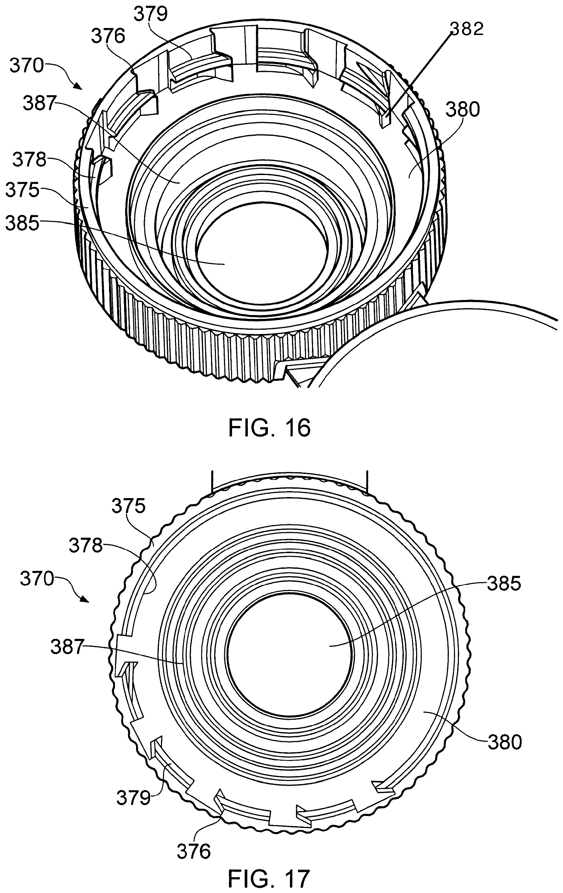

Referring now to Figures 16 and 17 there is shown a closure 370 formed according to the present invention. The closure 370 comprises a cylindrical sidewall 375 closed at one end by a top deck 380.

The top deck 380 includes, in this embodiment, a central dispensing orifice 385 defined by an upstanding turret-like spout 387 which projects from the external side of the top deck 380.

The interior surface of the side wall 375 is provided with a screw thread formation 378 which projects radially inwardly and extends helically. Part of the screw thread is comprised of a plurality of spaced thread sections 379.

"Behind" (defined relative to the direction of rotation) each thread section 379 is a ratchet 382. The ratchets 382 are formed integrally with the respective section, extending from the upper surface of the thread to the deck 380.

Between the ratchets the sidewall 375 includes lines of weakness 376 defined by local thinning. In use, the screw thread and ratchets can be used to screw the closure on to a container neck with screw thread and anti-rotation formations and to prevent unscrewing as previously described. In this embodiment, inclusion of the lines 376 means that if an attempt is made to override the ratchets and force the closure off the neck then the sidewall breaks along the lines 376 to destroy the sidewall and prevent re-application.

If the closure is applied to a "standard" neck finish with a screw thread but without anti-rotation formations then it may be configured to function as a normal screw-on, screw-off closure, with no anti-unscrewing functionality.

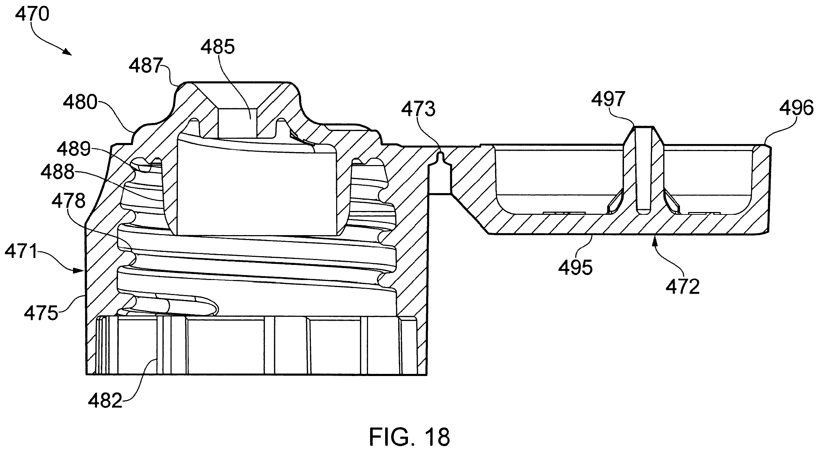

Referring now to Figures 18 to 21 there is shown a flip-top dispensing closure 470 formed according to an alternative embodiment, which does not form part of the present invention. The closure 470 comprises a base 471 and a lid 472.

The base 471 comprises a cylindrical sidewall 475 closed at one end by a top deck 480. The top deck 480 includes a spout 487 defining a central dispensing orifice 485. A cylindrical sealing projection 488 depends from the underside of the deck 480 around the spout 487. Between the projection 488 and the wall 475 an annular sealing bead 489 depends from the underside of the deck.

The interior surface of the side wall 475 is provided with a screw thread formation 478 which projects radially inwardly and extends helically.

At the free end of the skirt (i.e. opposite the deck) a plurality (in this embodiment eight) of ratchet teeth 482 (which in this embodiment are substantially the same) are positioned on the interior and extend radially inwards. The ratchets are generally flap-like, with an inclined leading section 483 extending from the skirt inner face, and a terminal abutment section 484 at its free end. The ratchets extend axially from the bottom of the screw thread to the free end of the skirt.

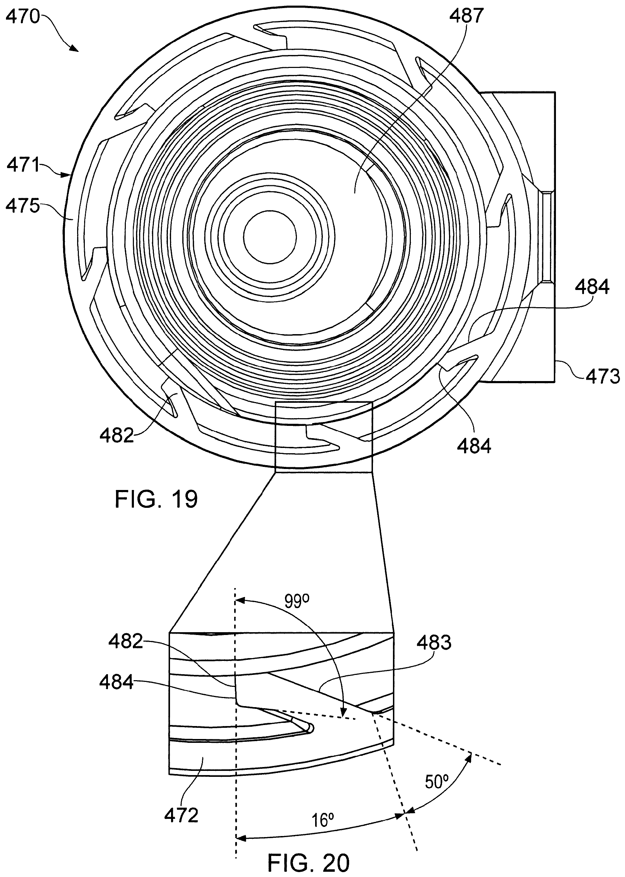

Figure 20 shows some angles relating to the ratchets. It is to be understood that these angles may merely be examples and that variations of, for example, up to 5, 10, 15, 20, 25, 30, 35 degrees and more may be used in alternative embodiments.

In this embodiment the diameter of the closure base is approximately 15mm. Other examples of diameter size include 20, 24 and 28mm. Larger and smaller diameters are possible.

The lid 472 is connected to the base 471 by a hinge 473, which in this embodiment is a butterfly hinge.

The lid 472 is generally disc-shape with a circular top plate 495 and a truncated sidewall 496 depending from the periphery of the plate. A spigot 497 depends from the centre of the underside of the plate and is sized and positioned to enter and seal the orifice 485 on the base when the lid is in the closed position.

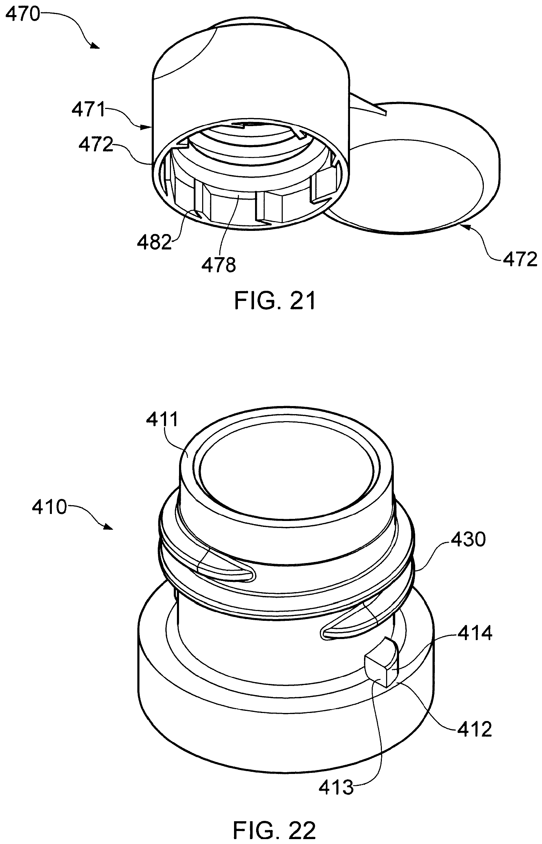

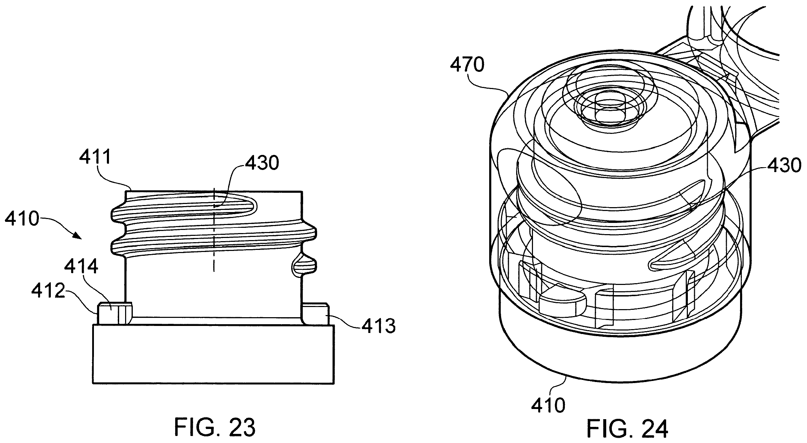

Referring now to Figures 22 and 23 there is shown a container neck 410 which includes a screw thread 430. The neck also includes a pair of diametrically opposed pawls 412 below (i.e. away from the open end of the neck) the thread. The pawls 412 include a flat abutment face 413 and a curved face 414.

In use, the closure 470 is applied to the neck 410 by rotation so that the threads 478, 430 engage. As the closure approaches the fully screwed on position the ratchets 482 encounter the pawls 412. The inclined sections 483 of the ratchets are able to pass over the curved faces 414 of the pawls 412 so that the closure can continue to rotate to its fully screwed on position as shown in Figure 24. The projection 488 enters the bore of the neck and the bead 489 is pressed onto the top 411 of the rim of the neck.

If an attempt is made to unscrew the closure from the neck the abutment sections 484 of two ratchet teeth engage respective pawl abutment faces 413; the teeth cannot pass over the pawls in the unscrewing direction.

Although illustrative embodiments of the invention have been disclosed in detail herein, with reference to the accompanying drawings, it is understood that the invention is not limited to the precise embodiment shown and that various changes and modifications can be affected therein by one skilled in the art without departing from the scope of the invention as defined by the appended claims.

## Claims

1. A closure (370) comprising a sidewall (375) closed at one end by a top plate (380), the sidewall comprising a screw thread (378) for engagement with a screw thread (30) on a container neck (10), the sidewall (375) further comprising one or more anti-rotation formations in the form of ratchets (382) for engagement with anti-rotation formations (40) on a container neck (10) so that the closure (370) can be screwed on to the neck (10) but is prevented from being unscrewed, wherein the ratchets (382) extend from the top plate (380), **characterised in that** the closure screw thread (378) comprises a plurality of spaced thread sections (379), wherein behind each of the plurality of spaced thread sections (379) there is one of the ratchets (382), each ratchet being formed integrally with the respective thread section (379), extending from the upper surface of the thread to the top plate (380).

2. A closure (370) as claimed in claim 1, in which the ratchets (382) are rotationally inclined away from the direction in which the closure (370) will be screwed onto a container neck (10).

3. A closure (370) as claimed in claim 1, in which between the thread sections the sidewall (375) includes lines of weakness (376) defined by local thinning along which the sidewall breaks if an attempt is made to force the closure off a neck in use.

4. A closure (370) as claimed in any preceding claim, in which the closure is a flip-top dispensing closure comprising a base and lid joined by a hinge, the base including a dispensing orifice (385).

5. A closure (370) as claimed in any preceding claim in combination with a container neck (10), in which the container neck (10) includes a screw thread (30) and anti-rotation formations (55) for engaging with the closure screw thread (378) and the ratchets (382).

6. A closure (370) in combination with a neck (10) as claimed in claim 5, in which the neck screw thread (30) is a ratchet screw thread, comprising a plurality of ratchet-like thread segments (40).

7. A closure (370) in combination with a neck (10) as claimed in claim 5 or claim 6, in which the neck screw thread (30) further comprises a continuous thread section (32).

8. A closure (370) in combination with a neck (10) as claimed in any of claims 5 to 7 in which the thread segments (40) comprise an inclined leading face (50) and a flat lagging face (55).

9. A closure (370) as claimed in any of claims 1 to 4, in combination with a container neck (10), in which the container neck (10) includes a screw thread (30) for engaging with the closure screw thread (378), in which the neck (10) is without anti-rotation formations such that the closure (370) is configured to function as a normal screw on screw off closure.

## Patentansprüche

1. Verschluss (370), der eine Seitenwand (375) umfasst, die an einem Ende durch eine obere Platte (380) verschlossen ist, wobei die Seitenwand ein Schraubengewinde (378) zum Eingriff mit einem Schraubenkopf (30) an einem Behälterhals (10) umfasst, wobei die Seitenwand (375) ferner ein oder mehrere Drehsicherungsgebilde in Form von Ratschen (382) zum Eingriff mit Drehsicherungsgebilden (40) an einem Behälterhals (10), so dass der Verschluss (370) auf den Hals (10) geschraubt werden kann, jedoch nicht abgeschraubt werden kann, umfasst, wobei sich die Ratschen (382) von der oberen Platte (380) erstrecken, **dadurch gekennzeichnet, dass** das Verschlussschraubengewinde (378) mehrere beabstandete Gewindebereiche (379) umfasst, wobei sich hinter jedem der mehreren beabstandeten Gewindebereiche (379) eine der Ratschen (382) befindet, wobei jede Ratsche mit dem jeweiligen Gewindebereich (379) integral ausgebildet ist und sich von der oberen Fläche des Gewindes zu der oberen Platte (380) erstreckt.

2. Verschluss (370) nach Anspruch 1, bei dem die Ratschen (382) aus der Richtung, in der der Verschluss (370) auf einen Behälterhals (10) geschraubt wird, weggedreht sind.

3. Verschluss (370) nach Anspruch 1, bei dem die Seitenwand (375) zwischen den Gewindebereichen durch eine lokale Verdünnung definierte Schwachstellen (376) umfasst, entlang denen die Seitenwand bricht, wenn versucht wird, bei Gebrauch den Verschluss von einem Hals zu entfernen.

4. Verschluss (370) nach einem vorhergehenden Anspruch, bei dem der Verschluss ein Klappdeckel-Ausgabeverschluss ist, der eine Basis und einen Deckel, die durch ein Scharnier verbunden sind, umfasst, wobei die Basis eine Ausgabeöffnung (385) umfasst.

5. Verschluss (370) nach einem vorhergehenden Anspruch in Kombination mit einem Behälterhals (10), bei dem der Behälterhals (10) ein Schraubengewinde (30) und Drehsicherungsgebilde (55) zum Eingriff mit dem Verschlussschraubengewinde (378) und den Ratschen (382) umfasst.

6. Verschluss (370) in Kombination mit einem Hals (10) nach Anspruch 5, bei dem das Halsschraubengewinde (30) ein Ratschenschraubengewinde ist, das mehrere ratschenartige Gewindesegmente (40) umfasst.

7. Verschluss (370) in Kombination mit einem Hals (10) nach Anspruch 5 oder Anspruch 6, bei dem das Halsschraubengewinde (30) ferner einen durchgängigen Gewindebereich (32) umfasst.

8. Verschluss (370) in Kombination mit einem Hals (10) nach einem der Ansprüche 5-7, bei dem die Gewindesegmente (40) eine geneigte vordere Seite (50) und eine flache hintere Seite (55) umfassen.

9. Verschluss (370) nach einem der Ansprüche 1-4 in Kombination mit einem Behälterhals (10), bei dem der Behälterhals (10) ein Schraubengewinde (30) zum Eingriff mit dem Verschlussschraubengewinde (378) umfasst, wobei der Hals (10) keine Drehsicherungsgebilde aufweist, so dass der Verschluss (370) dazu konfiguriert ist, als ein normaler Auf- und Abschraubverschluss zu funktionieren.

## Revendications

1. Bouchon (370) comprenant une paroi latérale (375) fermée au niveau d'une extrémité par une plaque supérieure (380), la paroi latérale comprenant un filet de vis (378) pour venir en prise avec un filet de vis (30) sur un col de contenant (10), la paroi latérale (375) comprenant en outre une ou plusieurs formations anti-rotation sous la forme de cliquets (382) pour venir en prise avec des formations anti-rotation (40) sur un col de contenant (10) de telle sorte que le bouchon (370) puisse être vissé sur le col (10) mais ne puisse pas être dévissé, dans lequel les cliquets (382) s'étendent depuis la plaque supérieure (380), **caractérisé en ce que** le filet de vis de bouchon (378) comprend une pluralité de sections de filet espacées (379), dans lequel, derrière chaque section de filet espacée de la pluralité de sections de filet espacées (379), se trouve l'un des cliquets (382), chaque cliquet étant formé d'un seul tenant avec la section de filet respective (379), s'étendant depuis la surface supérieure du film jusqu'à la plaque supérieure (380).

2. Bouchon (370) selon la revendication 1, dans lequel les cliquets (382) sont inclinés de manière à pouvoir tourner en s'éloignant de la direction dans laquelle le bouchon (370) sera vissé sur un col de contenant (10).

3. Bouchon (370) selon la revendication 1, dans lequel, entre les sections de filet, la paroi latérale (375) comprend des lignes de faiblesse (376) définies par un amincissement local le long duquel la paroi latérale se casse si une tentative de forcer le bouchon en dehors du col est faite lors de l'utilisation.

4. Bouchon (370) selon l'une quelconque des revendications précédentes, dans lequel le bouchon est un bouchon distributeur couronne comprenant une base et un couvercle réunis par une charnière, la base comprenant un orifice de distribution (385).

5. Bouchon (370) selon l'une quelconque des revendications précédentes en combinaison avec un col de contenant (10), dans lequel le col de contenant (10) comprend un filet de vis (30) et des formations anti-rotation (55) pour venir en prise avec le filet de vis de bouchon (378) et les cliquets (382).

6. Bouchon (370) en combinaison avec un col (10) selon la revendication 5, dans lequel le filet de vis de col (30) est un filet de vis à cliquet comprenant une pluralité de segments de filet à cliquet (40).

7. Bouchon (370) en combinaison avec un col (10) selon la revendication 5 ou la revendication 6, dans lequel le filet de vis de col (30) comprend en outre une section de filet continue (32).

8. Bouchon (370) en combinaison avec un col (10) selon l'une quelconque des revendications 5 à 7, dans lequel les segments de filet (40) comprennent une face avant inclinée (50) et une face isolante plate (55).

9. Bouchon (370) selon l'une quelconque des revendications 1 à 4, en combinaison avec un col de contenant (10), dans lequel le col de contenant (10) comprend un filet de vis (30) pour venir en prise avec le filet de vis de bouchon (378), dans lequel le col (10) est sans formations anti-rotation de telle sorte que le bouchon (370) soit configuré pour faire office de vis normale sur un bouchon à dévisser.
